# EUROPEAN PATENT SPECIFICATION

(11) **EP 1 111 277 B1**
(45) Date of publication and mention of the grant of the patent: **20.10.2004**
(21) Application number: 00311279.4
(22) Date of filing: 15.12.2000
(51) Int. Cl.: F16J 15/08

(54) **Metal Gasket**
Metallische Flachdichtung
Joint d'étanchéité métallique

(30) Priority: 22.12.1999 JP 36388499
(43) Date of publication of application: 27.06.2001
(73) Proprietor: NIPPON GASKET CO., LTD., Higashiosaka-shi, Osaka fu (JP)
(72) Inventor: Sugimoto, Kiyoshi, Nippon Gasket Company Ltd., Higashiosaka-shi, Osaka (JP); Miura, Masahiko, Nippon Gasket Company Ltd., Higashiosaka-shi, Osaka (JP); Yoshijima, Kazuya, Toyota Jidosha K.K., Toyota-shi, Aichi (JP)
(74) Representative: Jenkins, Peter David

(56) References cited:
- EP-A- 0 940 608
- DE-A- 19 654 283
- DE-U- 7 523 443
- US-A- 4 995 624

## Description

The present invention relates to metal gaskets used for providing seals, for example, between the opposed surfaces of the cylinder block and the cylinder head of an engine.

For sealing the joint between the opposed surfaces of the cylinder block and the cylinder head of an engine, there have been widely used metal gaskets composed of elastic metal plates.

For producing lightweight and small-sized engines, there are two concurrent noticeable tendencies in the recent development of engines. One is a trend toward making all of the structural members of an engine from aluminum alloys and the other is a trend toward higher combustion pressure for seeking higher output, higher performance engines. Although more lightweight cylinder heads and cylinder blocks etc. can be produced from aluminum alloys, compared to cases where iron materials are used, the use of aluminum alloys disadvantageously provides poor rigidity which causes considerable deformation in the cylinder head and the cylinder block when clamping the cylinder head gasket, so that it becomes difficult to obtain uniform static sealing surface pressure around the peripheries of the bores. In addition, during an operation of the engine, the relative displacement of the cylinder head and the cylinder block is increased by high pressure within the cylinders and heat, which leads to difficulty in achieving uniform dynamic sealing surface pressure.

To solve this problem, various kinds of cylinder head gaskets have been proposed and put to practical use, which have structures of high freedom to conform to slips and deformation occurring around the peripheries of the bore holes.

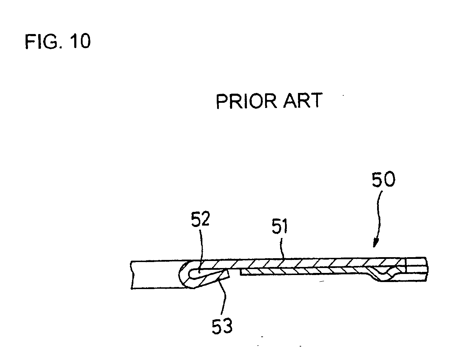

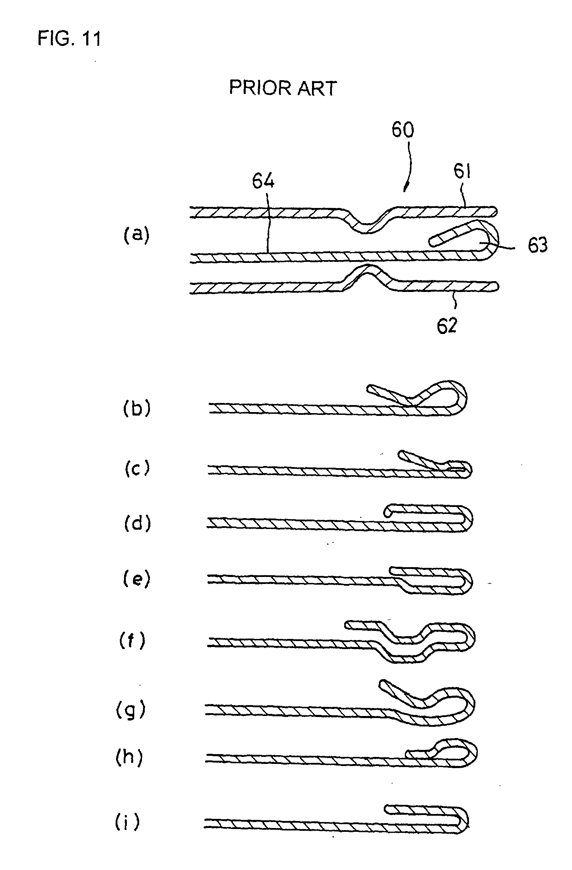

For example, Japanese Utility Model Publication (KOKAI) Gazette No. 1-118147 (1989) discloses a gasket 50 (see FIGURE 10) which is designed such that a folded-back portion 53 is so formed as to create a clearance 52 in the form of α together with a base 51, and a bore seal is provided utilizing the spring of the clearance 52. German Patent Publication No. 19654283 discloses a gasket 60 as shown in FIGURE 11(a), in which a stopper plate 64 having an α-shaped clearance 63 is interposed between two bead plates 61, 62 and the α-shaped clearance 63 provides a stopper function and a sealing surface pressure generating function. As the shape of the folded-back portion at the leading end of the stopper plate 64, this publication proposes various shapes such as shown in FIGURES 11(b) to 11 (i). U.S. Patent No. 4995624 discloses a gasket 70 which includes a folded-back portion having a convex profile composed of a combination of an α-shaped portion 71 and a trapezoidal portion 72. This convex profile composed of two portions in combination is designed with intent to obtain a double sealing function for reinforcing the bore seal and particularly to assure a wide sealed area at the trapezoidal portion 72.

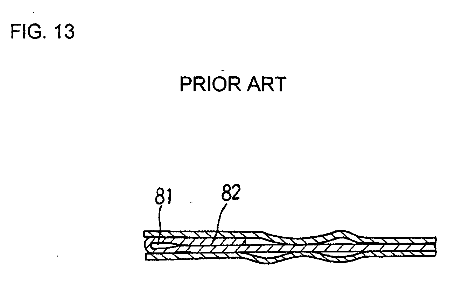

In the folded-back portion having an α-shaped clearance in each of the conventional gaskets shown in FIGURES 10 and 11, when the gasket is clamped, the clearance virtually disappears as shown in FIGURE 13 so that only the minimum portion of a round portion 81 is left as an actual clearance. As a result, surface pressure cannot be uniformly distributed throughout the surface of a folded-back portion 82, but is concentrated only on the portion which corresponds to the round portion and is located in the closest proximity to the periphery of the bore hole. This leads to such a drawback that only a single sealing line is formed and an excessive local stress is also concentrated on the region of the sealing line corresponding to the round portion. If considerable deformation or distortion occurs around the bore of the cylinder head or cylinder block, conformity to the deformation deteriorates in the region of the single sealing line closest to the periphery of the bore hole with the result that the seal is partially destroyed and therefore a reliable bore seal can be no longer ensured.

The above-mentioned Japanese Utility Model Publication (KOKAI) Gazette No. 1-118147 and German Patent Publication No. 19654283 have proposed other shapes (e.g., circular shapes and rectangular shapes (see FIGURE 11(b) to 11(i)) than the a shapes as the configuration of the clearance. However, with any of the above shapes, the phenomenon, which is basically the same as that in the case of the α-shaped clearance, inevitably occurs when the head gasket is clamped. In addition, since sufficient width cannot be attained for the folded-back portions of these complicated shapes, such folded-back portions are difficult to machine and therefore disadvantageous in view of cost and quality control.

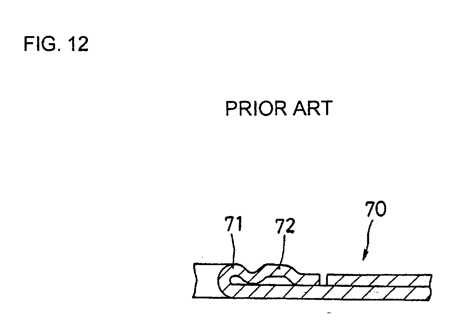

The convex shape obtained by combining the α- shaped portion 71 with the trapezoidal portion 72 as shown in FIGURE 12 has the advantage that a double sealing line can be formed at the folded-back portion and the flat part of the trapezoidal portion 72 can be externally formed, which widens the sealed area to reinforce the seal. However, where a plate of such a shape is interposed between two bead plates to be incorporated in an engine such as described above which is susceptible to significant deformation, it is difficult to form a stable sealing line at the joints between the flat face of the convex portion of the trapezoidal portion 72 and the bead plates so that a stable double sealing line cannot be easily formed on the folded-back portion.

EP-A-0940608 discloses a gasket having a plate that includes a body portion, a flange portion and an aperture, the thickness of the flange portion being reduced to less than that of the body portion by an extrusion and ironing process, the flange portion being folded back onto a surface of the plate in facing relation to form a stopper seal to act as a primary seal.

The present invention has been directed to overcoming the foregoing problems and a prime object of the invention is therefore to provide a metal gasket in which a clearance formed by fold-back can be maintained when the gasket is clamped, thereby (i) maintaining the stopper function of the folded-back portion in cases where the plate having the folded-back portion is used in combination with bead plates; (ii) improving the conformity of the clearance with respect to deformation; (iii) maintaining a double sealing line on the folded-back portion; and (iv) maintaining the surface contact in the double sealed region in order to improve the reliability and durability of the seal.

The above aim can be achieved by a metal gasket according to claim 1.

According to the invention, the profile of each folded-back portion of the folded-back portion forming plate is designed such that a multiplicity of, for instance, two smooth convex curve portions projecting in a direction opposite to the base are arranged in a continuous manner. With this arrangement, when the folded-back portion forming plate is clamped, for instance, between the opposed surfaces of the cylinder head and the cylinder block, the clearance between the base and the folded-back portions can be left as much as possible, so that stable double bore sealing line can be formed by the folded-back portion. Additionally, when the cylinder head is deformed for instance, the clearance accommodates itself to the deformation easily, and therefore the two contact-sealed regions can easily conform to the deformation, thereby maintaining the double sealing effect. By virtue of this arrangement, where the gasket of the invention is used at a position around bore holes which requires high sealing performance, leakage of a fluid such as combustion gas which passes through the bore holes can be securely prevented, so that reliable sealing as as excellent gasket durability can be achieved.

The gasket of the invention has a bead plate which is laminated on the upper surface and/or lower surface of the folded-back portion forming plate and a bead of the bead plate is arranged so as to confront the base of the folded-back portion forming plate. By use of a bead plate (bead plates) in combination with the folded-back portion forming plate, the folded-back portion forming plate maintains its stopper function for restraining the deformation of the bead of the bead plate so that a more reliable gasket can be provided.

In this case, an intermediate plate may be laminated between the folded-back portion forming plate and the bead plate.

In the invention, it is preferable to form flexures or bents on the base at positions each confronting the leading end of the folded-back portion. This prevents occurrence of cracking caused by repetitive stress imposed on the fundamental part of the folded-back portion forming plate, in the event that the folded-back portion forming plate is compressed by the bead plate when the folded-back portion forming plate is clamped.

The gasket of the invention may be arranged that an adjuster plate is laminated on the upper surface and/or lower surface of the folded-back portion forming plate at a position confronting the base of the folded-back portion forming plate.

In this case, the outer surfaces of the convex curve portions and the outer surface of the base of the folded-back portion forming plate which confronts the convex curve portions are respectively partly provided with a coating portion, and the outer surface of the adjuster plate and the outer surface of the base of the folded-back portion forming plate which confronts the adjuster plate are respectively partly provided with an auxiliary bead portion.

Embodiments of the present invention will now be described by way of example only, with reference to the accompanying drawings, in which:-
FIGURE 1 is a partial plan view of a metal gasket according to one embodiment of the invention.
FIGURE 2(a) is a sectional view taken along line I-I of FIGURE 1.
FIGURE 2(b) is an enlarged view of a fundamental part of a stopper plate.
FIGURE 3 is a sectional view illustrating a sealing effect exerted when a cylinder head is deformed at a position apart from bolt holes.
FIGURE 4 is a sectional view illustrating the concept of a sealing effect exerted when sagging deformation occurs at the upper end of the inner wall of a bore hole.
FIGURES 5(a) to 5(e) are sectional views showing modifications of the shape of a convex curve portion.
FIGURES 6(a) and 6(b) are sectional views of a part of another embodiment having a two-plate structure including a stopper plate and a plate such as an adjuster plate.
Figures 6(c) and 6(d) are sectional views of another embodiment having a two-plate structure including a stopper plate and a bead plate.
FIGURES 7(a) to 7(c) are sectional views each showing an example in which another structural plate is used in combination with the stopper plate.
FIGURES 8(a) and 8(b) show an application of the invention to a gasket in which adjacent beads meets each other.
FIGURES 9(a) and 9(b) are sectional views of a modification of the stopper plate having a folded-back portion composed of two continuous convex parts.
FIGURE 10 is a sectional view of a conventional gasket (1) having a folded-back portion.
FIGURES 11(a) to 11(i) are sectional views of another conventional gasket (2) having a folded-back portion.
FIGURE 12 is a sectional view of another conventional gasket (3) having a folded-back portion.
FIGURE 13 illustrates a problem presented by the conventional gaskets (1) and (2).

Referring now to the accompanying drawings, preferred embodiments of a metal gasket according to the invention will be described.

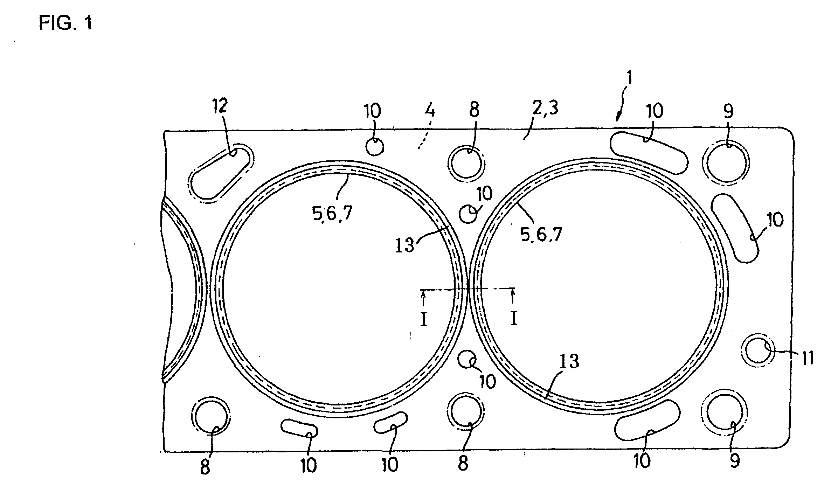

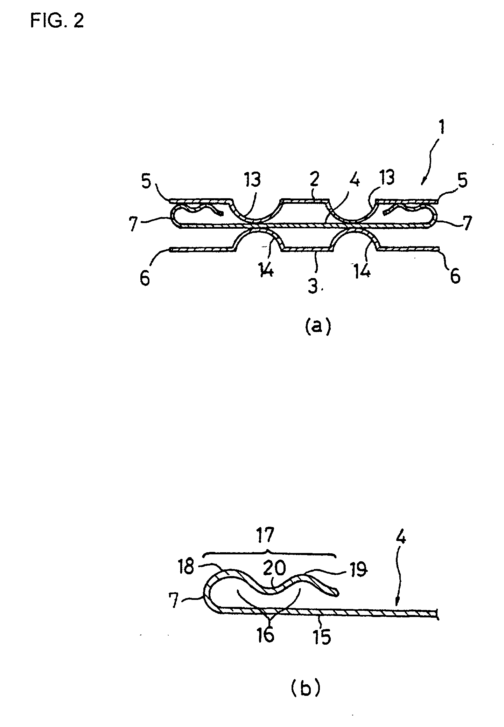

FIGURE 1 shows a partial plan view of a metal gasket constructed according to a first embodiment of the invention. FIGURES 2(a) and 2(b) show a sectional view taken along line I-I of FIGURE 1 and an enlarged view of the fundamental part of a stopper plate, respectively.

A metal gasket 1 constructed according to the present embodiment is used for sealing the joints between the opposed surfaces of a cylinder head and a cylinder block in a multiple cylinder engine. The metal gasket 1 is composed of two bead plates 2, 3 and a stopper plate 4 (i.e., the folded-back portion forming plate) that is interposed between the bead plates 2, 3 as an intermediate plate. The bead plates 2, 3 are formed in such a way that a metal piece stamped out of a stainless spring steel plate (e.g., SUS301) having a specified thickness is subjected to shaping processing such as bead forming and subjected, if necessary, to thermal treatment and surface treatment before or after the shaping processing. The stopper plate 4 is also formed by stamping a metal piece out of a stainless spring steel plate (e.g., SUS304) having a specified thickness or a metal material having characteristics equivalent to the aforesaid stainless spring steel plate and then applying shaping processing such as folding back to the metal piece.

The bead plates 2, 3 have bore holes 5, 6 respectively, which correspond to a plurality of cylinder bores juxtaposed in the cylinder block. The stopper plate 4 is provided with holes 7. The bead plates 2, 3 and the stopper plate 4 respectively have bolt holes 8, bolt and knock holes 9, water holes 10, oil holes 11 and an oil and bolt hole 12 which are so formed as to pierce through these plates.

The bead plate 2 has an annular bead 13 constituted by a full bead extending about the periphery of the bore 5. The bead plate 3 also has a bead 14 which has the same size and is formed at the same position as the bead 13 and which extends about the periphery of the bore hole 6. The bead plates 2, 3 are so arranged that the tops of the beads 13 and 14 face each other, being in contact with the opposed surface of the stopper plate 4.

Reference is made to FIGURE 2(b) to describe the configuration of the stopper plate 4 in detail. The stopper plate 4 includes a base 15 and a folded-back portion 17 which is folded back to the base 15 with a clearance 16 between the folded-back portion 17 and the base 15. The folded-back portion 17 extends about the entire periphery of the bore hole 7. The profile of the folded-back portion 17 has a first convex curve portion 18 of a smooth arc shape which projects in a direction opposite to the base 15 and a second convex curve portion 19 of a smooth arc shape which continues from the first convex curve portion 18. As shown in FIGURE 2(b), the folded-back portion 17 is formed so as not to touch the base 15 when it is in a free condition. The profile of a concave curve portion 20 formed between the first and second convex curve portions 18, 19 should not have a sharp edge shape but have an arc shape which is smooth as much as possible and has a smaller radius of curvature, so that excessive surface pressure is not concentrated on this concave curve portion 20. When the stopper plate 4 is in its free condition before clamping, the convex curve portions 18, 19 are not necessarily in contact with the bead plate 2 as shown in FIGURE 2(a), but they may be arranged depending on various design conditions such that neither of them are in contact with the bead plate 2 or such that either of them is in contact with the bead plate 2.

According to the present embodiment, when the gasket 1 is clamped between the opposed surfaces of the cylinder head and the cylinder block, the clearance 16 formed by the folded-back portion 17 of the stopper plate 4 can be maintained and a double bore sealing line can be formed by the two convex parts (i.e., the first and second convex curve portions 18, 19) of the folded-back portion 17. Since the clearance 16 easily accommodates itself to deformation, each sealed region can be kept in its surface contact condition during deformation of the engine. The first convex curve portion 18 and the second convex curve portion 19 do not meet the bead 13 of the bead plate 2 but maintain their stopper function for restricting the deformation of the bead 13. In this way, an annular contact region for maintaining the surface contact condition of the double sealed portion is formed around the bore holes 5, 6 and 7 at which high sealing performance is so that a fluid such as combustion gas passing through the bore holes 5, 6 and 7 can be reliably prevented from leaking.

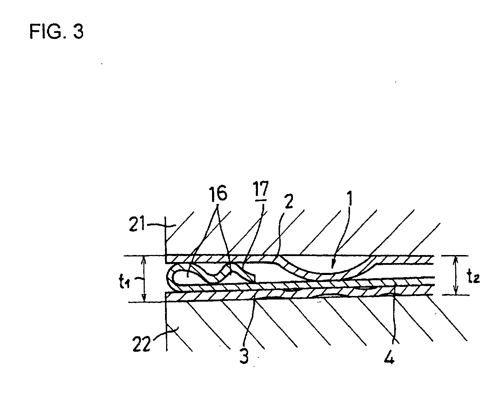

FIGURE 3 shows a sectional view of the metal gasket 1 of the present embodiment, which illustrates a sealing effect obtained when the cylinder head is deformed at a position away from the bolt holes. Even if the gap t₁ between a cylinder head 21 and a cylinder block 22 on the inner of the bore hole becomes greater than the gap t₂ on the outer side as shown in FIGURE 3 due to the deformation of the cylinder head 21 during bolt clamping or explosion, the upper bead plate 2 can be kept in surface contact with the stopper plate 4 at the two convex parts (i.e., the first and second convex curve portions 18 and 19), thank to the stopper function and spring function of the folded-back portion 17. Even when distortion in a vertical direction thus occurs, the clearance 16, namely, the two surface contact sealed regions can accommodate themselves to the deformation, reliably maintaining the double sealing effect.

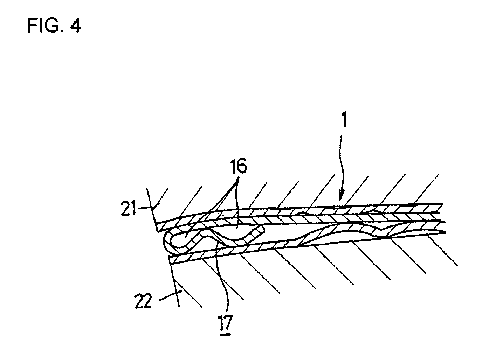

FIGURE 4 is a sectional view of the metal gasket 1, illustrating the concept of a sealing effect that can be obtained when sagging deformation occurs in the upper end of the bore hole inner wall. By the arrangement in which the folded-back portion 17 is located at the side of the cylinder block 22, the clearance 16 can easily accommodate itself to the sagging deformation while the folded-back portion 17 maintaining the two surface contact sealing lines, so that the stable double sealing effect can be achieved.

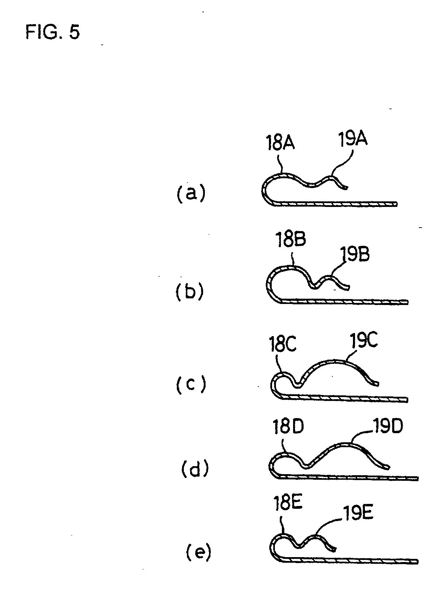

While the first and second convex curve portions 18 and 19 formed on the folded-back portion 17 of the stopper plate 4 have the substantially same arc curve shape, there are various modifications for the shape of these convex curve portions. FIGURES 5(a) to 5(e) show the modifications of the shape of the convex curve portions.

FIGURE 5(a) shows an example in which a first convex curve portion 18A has an oval shape while a second convex curve portion 19A has a small circular shape, and the heights of the first and second convex curve portions 18A, 19A from the base are the same. FIGURE 5(b) shows an example in which a first convex curve portion 18B has a large circular shape while a second convex curve portion 19B has a small circular shape. FIGURE 5(c) shows an example in which a first convex curve portion 18C has a small circular shape while a second convex curve portion has a large oval shape. FIGURE 5(d) shows an example in which a first convex curve portion 18D has a small oval shape while a second convex curve portion 19D has a large oval shape. FIGURE 5(e) shows an example in which a first convex curve portion 18E and a second convex curve portion 19E are in the of a small circle and have the same height from the base. The same effect as that of the foregoing embodiment can be expected by employing any of these shapes.

While the foregoing embodiment has been described with a gasket having a three-plate structure composed of the two bead plates 2, 3 and the stopper plate 4 interposed between the bead plates 2, 3, other structures may be employed. For instance, a combination of one bead plate and one stopper plate is possible, or alternatively, only a stopper plate may be used. Another alternative is such that a stopper plate having the above-described base, folded-back portions and clearances is employed as a basic component and an adjuster plate etc. having no beads is laminated on the stopper plate.

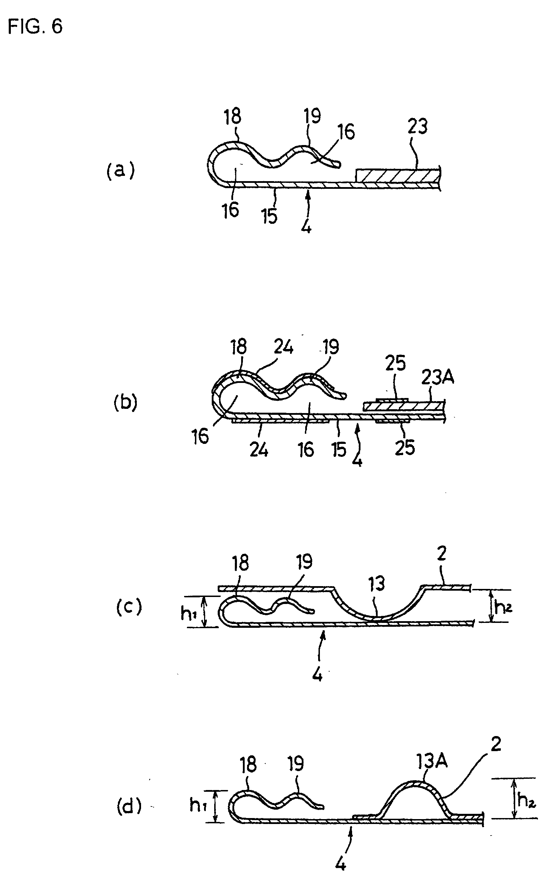

FIGURES 6(a) and 6(b) show a part of another embodiment of the gasket having a two-plate structure composed of the stopper plate and the adjuster plate. This embodiment is one application example of the stopper plate of the above-described structure. Figures 6(c) and 6(d) show another embodiment of the gasket having the two-plate structure composed of the stopper plate and the bead plate.

FIGURE 6(a) shows part of an example in which an adjuster plate or a shim plate 23 is laminated on the base 15 of the stopper plate 4. FIGURE 6(b) shows part of an example in which the outer surface of the convex curve portions 18, 19 and the outer surface of the base 15 which faces the convex curve portions 18, 19 are respectively partly provided with a known coating portion 24 made from rubber etc., while the outer surface of an adjuster plate 23A and the outer surface of the base 15 which faces the adjuster plate 23A are respectively partly provided with a known auxiliary soft material bead portion 25 made from rubber etc., whereby the bore seal is reinforced. The positions and number of the coating portions 24 and the auxiliary soft material bead portions 25 may be arbitrarily selected in combination. Also, the coating material, the soft material and their thickness can be arbitrarily determined.

FIGURE 6(c) shows an example in which the bead plate 2 is laminated so as to accommodate the convex curve portions 18, 19. FIGURE 6(d) shows an example in which the bead plate 2 is laminated without the convex curve portions 18, 19. In both cases, the height h₂ of the bead plate 2 is set to be higher than or equal to the height h₁ of the convex curve portions 18, 19 to prevent the compression of whole the bead 13(13A). Additionally, in any of the cases shown in FIGURES 6(a) to 6(d), good conformity to deformation such as shown in FIGURES 3 and 4 can be achieved

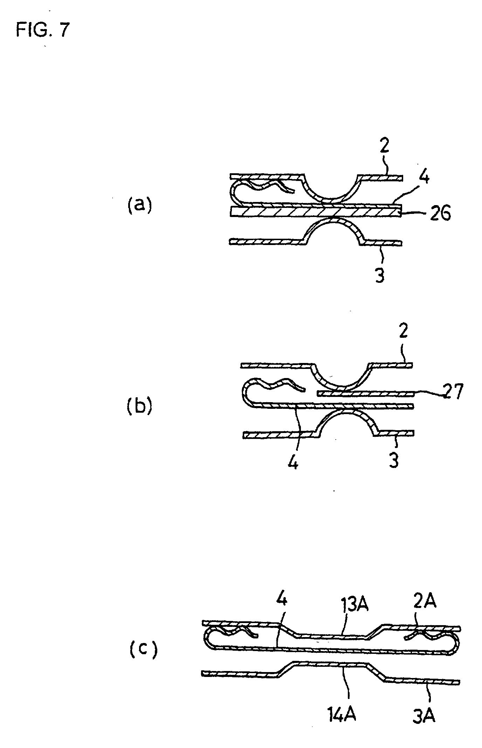

FIGURES 7(a) to 7(c) show another application of the stopper plate having the folded-back portion composed of the two convex parts which are continuously formed. In this application, the stopper plate is used in combination with another type of structural plate, Note that FIGURES 7(a) and 7(b) are sectional views taken along line B-B of FIGURE 1.

The foregoing embodiment is associated with the gasket having the three-plate structure in which the stopper plate 4 is interposed between the two bead plates 2 and 3, whereas FIGURE 7(a)shows an example of the gasket of the four-plate structure in which an intermediate plate 26 is further interposed between the stopper plate 4 and the lower bead plate 3. FIGURE 7(b) shows, in contrast with the three-plate structure, another example of the four-plate structure in which an adjuster plate or shim plate 27 is partly inserted between the stopper plate 4 and the upper bead plate 2. FIGURE 7(c) shows another gasket having the three-plate structure in which beads 13A, 14A in upper and lower bead plates 2A, 3A are half beads. It should be noted that full beads and half beads may be arbitrarily used in combination for the bead plates in each of the above examples. In addition, the thickness of each member can be arbitrarily determined.

The representative examples of the material of the adjuster plate such as the intermediate plate and the shim plate used in each of the above examples include soft steel and stainless steel.

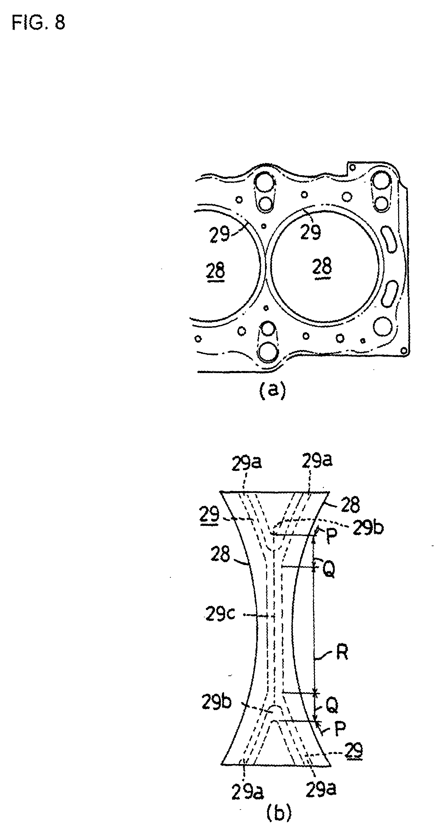

While the foregoing embodiment has been described with a case where the beads do not meet each other between the two adjacent bore holes, the invention is also applicable to gaskets in which the adjacent beads meet each other as shown in FIGURES 8(a) and 8(b). In the example shown in FIGURE 8, beads 29 are formed so as to extend about the peripheries of bore holes 28. The beads 29 are composed of single bead parts 29a located in the regions P other than the region situated between the bore holes 28; meeting bead parts 29b located in the regions Q where the adjacent single beads 29a meet each other; and a common bead part 29c located in the region R situated between the bore holes 28. In this case, the single bead parts 29a and the common bead part 29c have the substantially same bead width; each meeting bead part 29b is connected to the common bead part 29c and to the single bead parts 29a, with a smooth curved surface having a smaller curvature than that of the curved surfaces of the single bead parts 29a; and the bead width is getting bigger from the common bead part 29c to the single bead parts 29a. By virtue of this arrangement, the spring constant of the meeting bead parts 29b can be properly set so that the load stress on the meeting bead parts 29b can be prevented from excessively increasing (Japanese Patent Publication (KOKAI) Gazette No. 6-74343).

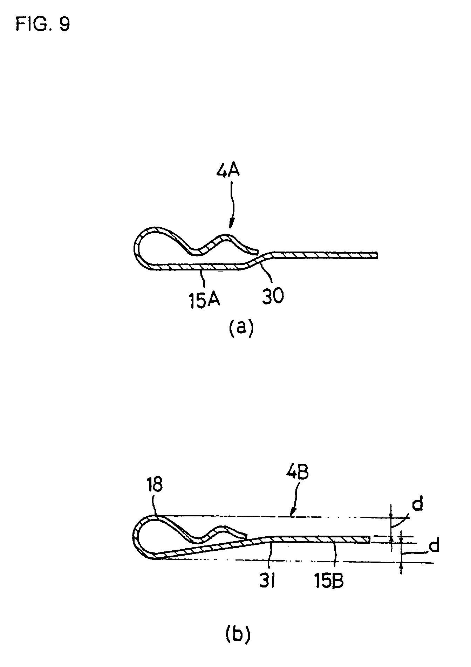

FIGURES 9(a) and 9(b) each show a modification of the stopper plate having two convex-shaped folded-back portions which are continuously formed.

In the stopper plate 4A shown in FIGURE 9(a), a flexure 30 is formed on a base 15A at a position confronting the leading end of the folded-back portion. In the stopper plate 4B shown in FIGURE 9(b), a bent 31 is formed on a base 15B at a position confronting the leading end of the folded-back portion. The reason for the provision of the flexure 30 and the bent 31 is as follows. If the stopper plate is compressed against the lower bead plate 3 as shown in FIGURE 3 when clamping the stopper plate, the flexure 30 such as shown in FIGURE 9(a) or the bent 31 such as in FIGURE 9(b) would occur. If repetitive stresses are imposed on the flexure or the bent thus formed, there would be the risk of cracks in this part. To avoid the cracks, the stopper plates 4A is provided beforehand with the flexure 30 at the desired position, or the stopper plates 4B is provided beforehand with bent 31 at the desired position. In cases where the bent 31 shown in FIGURE 9(b) is formed, the leading end of the first convex curve portion 18 flexes, causing favorable deformation with clearances d having the same length in the vertical direction of the figure.

In each of the foregoing embodiments, the materials of the stopper plate, the bead plates and the intermediate plate are not limited to those mentioned earlier but their examples may include aluminum alloys, titan-aluminum alloys and similar metal materials. The thickness of each plate is not particularly limited but the preferable thickness of the stopper plate is substantially equal to or smaller than the thickness of other plate members.

In each of the forgoing embodiments, the profile of the folded-back portion is composed of two convex curve portions which are continuously formed. However, the number of convex curve portions is not limited to two but a shape having three or more continuously formed convex curve portions may be employed. Additionally, a known means for filling the clearance 16 with an elastic spring, soft material member or the like may be used in combination.

## Claims

1. A metal gasket (1) having a folded-back portion forming plate (4) which comprises a base (15) folded-back portions (17) each of which is formed so as to create a clearance together with the base (15) and disposed so as to extend around the bore hole (17),
wherein each folded-back portion (17) has a profile composed of a multiplicity of smooth convex curve portions (18,19) which are arranged in a continuous fashion so as to project in a direction opposite to the base,
**characterised in that** a bead plate (2,3) is laminated on the upper surface and/or lower surface of the folded-back portion forming plate (4) and a bead (13,14) of said bead plate (2,3) is arranged so as to confront the base (15) of the folded-back portion forming plate (4).

2. A metal gasket (1) according to claim 1, wherein an intermediate plate (26) is laminated between the folded-back forming plate (4) and the bead plate (2,3).

3. A metal gasket (1) according to claim 1, wherein the base (15) is provided with flexures (30) or bents (31) which are preformed at positions each confronting the leading end of each folded-back portion (17).

4. A metal gasket (1) according to claim 1, wherein an adjuster plate (23) is laminated on the upper surface and/or lower surface of the folded-back portion forming plate (4) at a position confronting the base (15) of the folded-back portion forming plate (4).

5. A metal gasket (1) according to claim 4, wherein the outer surfaces of the convex curve portions (18,19) and the outer surface of a region of the base (15) of the folded-back portion forming plate (4) are respectively partly provided with a coating portion (24), said base region confronting the convex curve portions (18,19), and
wherein the outer surface of the adjuster plate (23A) and the outer surface of a region of the base (15) of the folded-back portion forming plate (4) are respectively partly provided with an auxiliary bead portion (25), said base region confronting the adjuster plate (23A).

6. A metal gasket according to claim 1, wherein the metal gasket (1) has a plurality of bore holes and each folded-back portion (17) is disposed so as to extend around a respective bore hole (7), and one or two bead plates (2,3) are provided, the or each bead plate (2,3) being laminated on a respective upper and/or lower surface of the folded-back portion forming plate (4).

7. A metal gasket according to claim 6, wherein the or each bead plate (2,3) has a bead (13,14) extending around the periphery of each bore hole (5,6).

## Patentansprüche

1. Metallische Flachdichtung (1) mit einem zurück gefalteten Teil einer Formplatte (4), welches eine Basis (15) beinhaltet, zurück gefaltete Teile (17), von denen jedes derart ausgebildet ist um einen Abstand zusammen zu der Basis (15) zu erzeugen und derart eingerichtet ist um sich um die Bohrung (17) zu erstrecken,
worin jedes zurück gefaltete Teil (17) ein Profil aufweist, welches aus einer Mehrzahl von geringfügig konvexen Krümmungsteilen (18,19) aufgebaut ist, welche in fortlaufender Weise angeordnet sind um sichin einer der Basis gegenüberliegenden Richtung hervorzutreten,
**dadurch gekennzeichnet, dass** auf der oberen Oberfläche und/oder der unteren Oberfläche des zurück gefalteten Teiles der Formplatte (4) eine Wulstplatte (2,3) laminiert ist und ein Wulst (13,14) der Wulstplatte (2,3) ist derart angeordnet um der Basis (15) des zurück gefalteten Teiles der Formplatte (4) gegenüberzustehen.

2. Metallische Flachdichtung (1) nach Anspruch 1, worin eine Zwischenplatte (26) zwischen der zurück gefalteten Formplatte (4) und der Wulstplatte (2,3) laminiert ist.

3. Metallische Flachdichtung (1) nach Anspruch 1, worin die Basis (15) mit Biegungen (30) oder Krümmungen (31) ausgestattet ist, welche an Positionen vorgeformt sind, die dem Führungsende eines jeden zurück gefalteten Teiles (17) gegenüberliegen.

4. Metallische Flachdichtung (1) nach Anspruch 1, worin eine Justierplatte (23) auf die obere Oberfläche und/oder untere Oberfläche des zurück gefalteten Teiles der Formplatte (4) an einer Position laminiert ist, die der Basis (15) des zurück gefalteten Teiles der Formplatte (4) gegenüberliegt.

5. Metallische Flachdichtung (1) nach Anspruch 4, worin die äußeren Oberflächen der konvexen Krümmungsteile (18,19) und die äußere Oberfläche eines Bereiches der Basis (15) des zurück gefalteten Teiles der Formplatte (4) entsprechend teilweise mit einer Beschichtung (24) versehen sind, wobei der Basisbereich den konvexen Krümmungsteilen (18,19) gegenüberliegt, und
worin die äußere Oberfläche der Justierplatte (23A) und die äußere Oberfläche eines Bereiches der Basis (15) des zurück gefalteten Teiles der Formplatte (4) entsprechend teilweise versehen sind mit einem zusätzlichen Wulstteil (25),
wobei der Basisbereich der Justierplatte (23A) gegenüberliegt.

6. Metallische Flachdichtung nach Anspruch 1, worin die metallische Flachdichtung eine Vielzahl von Bohrungen aufweist und wobei jedes zurück gefaltete Teil (17) eingerichtet ist um sich um eine entsprechende Bohrung (7) herum zu erstrecken und eine oder zwei Wulstplatten (2,3) sind vorhanden, von denen die oder jede Wulstplatte (2,3) auf eine entsprechende obere und/oder untere Oberfläche des zurück gefalteten Teiles der Formplatte (4) laminiert ist.

7. Metallische Flachdichtung nach Anspruch 6, worin die eine oder jede der Wulstplatten (2,3) einen Wulst (13,14) aufweist, der sich um den Umfang einer jeden Bohrung (5,6) herum erstreckt.

## Revendications

1. Joint d'étanchéité métallique (1) comportant une plaque (4) formant des parties repliées qui comprend une base (15), des parties repliées (17) dont chacune est formée de façon à créer un dégagement conjointement avec la base (15) et est disposée de façon à s'étendre autour du trou d'alésage (17),
dans lequel chaque partie repliée (17) a un profil constitué d'une multitude de parties (18, 19) de courbe convexe régulière qui sont agencées de façon continue de façon à faire saillie dans une direction opposée à la base,
**caractérisé en ce qu'**une plaque à bourrelets (2, 3) est laminée sur la surface supérieure et/ou la surface inférieure de la plaque (4) de formation de parties repliées et un bourrelet (13, 14) de ladite plaque à bourrelets (2, 3) est agencée de façon à faire face à la base (15) de la plaque (4) de formation de parties repliées.

2. Joint d'étanchéité métallique (1) selon la revendication 1, dans lequel une plaque intermédiaire (26) est laminée entre la plaque (4) de formation de parties repliées et la plaque à bourrelets (2, 3).

3. Joint d'étanchéité métallique (1) selon la revendication 1, dans lequel la base (15) est pourvue de parties fléchies (30) ou de coudes (31) qui sont préformés à des positions faisant face, chacune, à l'extrémité de tête de chaque partie repliée (17).

4. Joint d'étanchéité métallique (1) selon la revendication 1, dans lequel une plaque (23) de réglage est laminée sur la surface supérieure et/ou la surface inférieure de la plaque (4) de formation de parties repliées, à une position faisant face à la base (15) de la plaque (4) de formation de parties repliées.

5. Joint d'étanchéité métallique (1) selon la revendication 4, dans lequel les surfaces extérieures des parties (18, 19) de courbe convexe et la surface extérieure d'une région de la base (15) de la plaque (4) de formation de parties repliées sont, respectivement, partiellement pourvues d'une partie (24) de revêtement, ladite région de base faisant face aux parties (18, 19) de courbe convexe, et
dans lequel la surface extérieure de la plaque (23A) de réglage et la surface extérieure d'une région de la base (15) de la plaque (4) de formation de parties repliées sont, respectivement, partiellement pourvues d'une partie (25) de bourrelet auxiliaire, ladite région de base faisant face à la plaque (23A) de réglage.

6. Joint d'étanchéité métallique selon la revendication 1, dans lequel le joint d'étanchéité métallique (1) comporte une pluralité de trous d'alésage et chaque partie repliée (17) est disposée de façon à s'étendre autour d'un trou d'alésage respectif (7), et une ou deux plaques à bourrelets (2, 3) sont prévues, la ou chaque plaque à bourrelets (2, 3) étant laminée sur une surface supérieure et/ou inférieure respective de la plaque (4) de formation de parties repliées.

7. Joint d'étanchéité métallique selon la revendication 6, dans lequel la ou chaque plaque à bourrelets (2, 3) comporte un bourrelet (13, 14) s'étendant autour de la périphérie de chaque trou d'alésage (5, 6).
